# FASCICULE DE BREVET EUROPEEN

(11) **EP 2 949 202 B1**
(45) Date de publication et mention de la délivrance du brevet: **24.08.2016**
(21) Numéro de dépôt: 15166622.9
(22) Date de dépôt: 06.05.2015
(51) Int. Cl.: A01G 9/12

(54) **Crochet dévideur pour le palissage de plantes**
Auf-/abrollhaken für das aufbinden von pflanzen
Winding hook for tying up plants

(30) Priorité: 28.05.2014 FR 1454861
(43) Date de publication de la demande: 02.12.2015
(73) Titulaire: A. RAYMOND ET CIE, 38000 Grenoble (FR)
(72) Inventeur: Massaguer Agullo, M. Miquel, 08224 Terrassa Barcelona (ES); Torres Carpio, M. Josep, 08250 Barcelona (ES)
(74) Mandataire: Prugneau, Philippe

(56) Documents cités:
- EP-A1- 0 507 378
- EP-A1- 2 412 231
- EP-A2- 2 404 498
- FR-A1- 2 680 446
- FR-A1- 2 779 906

## Description

### Domaine technique

L'invention concerne un crochet dévideur pour le tuteurage d'une plante grimpante.

L'invention s'applique plus particulièrement à la culture de plants de tomates dans une serre.

### Technique antérieure

A l'intérieur de la serre, chaque plant de tomate est tuteuré par une ficelle qui peut être laissée libre verticalement. Cette ficelle est maintenue en hauteur sur un câble horizontal s'étendant parallèlement à la rangée auquel appartient le plant de tomate en question.

En partie haute, la ficelle est enroulée sur une bobine accrochée au câble support précité.

Cette bobine, couramment appelée "crochet à tomates" est traditionnellement réalisée en fil de fer plié, s'inscrivant dans un plan (bobine plate).

En début de saison, la ficelle est verticale, le crochet à tomates surplombant le jeune plant. Au cours de la saison, le plant va croître progressivement, et la fructification va s'opérer du bas vers le haut, par grappes successives.

Afin d'augmenter la production de fruits sur un même plant, on cherche à augmenter la longueur de la ficelle pendant la croissance du plant.

Pour obtenir ce résultat, on déplace progressivement et périodiquement le crochet à tomates le long du câble support horizontal et on dévide du crochet à tomates une certaine longueur de ficelle, pour lui "donner du mou", et autoriser l'inclinaison du plant.

Cette opération est réalisée par des personnes juchées sur des chariots se déplaçant le long de la rangée de plants ; ils manipulent un à un chaque crochet, les font tourner sur eux-mêmes pour débobiner la longueur souhaitée de ficelle, et les déplacent un à un sur le câble support dans une position un peu décalée (suivant la longueur du câble support) par rapport à la position initiale, pour donner à la ficelle la longueur et la courbure voulues.

En général, le câble support d'accrochage des crochets à tomates se situe à une hauteur de 3 mètres environ au-dessus du sol. La longueur de la ficelle est de l'ordre de 7 mètres, ce qui correspond à une réserve de l'ordre de 4 mètres, suffisante pour une saison.

En début de saison, il est nécessaire d'accrocher sur le câble support un crochet à tomates à l'aplomb de chaque jeune plant.

Les crochets sont livrés par les fabricants déjà garnis de la ficelle.

Lors de cet accrochage, l'opérateur, juché sur un chariot, laisse "filer" librement la longueur de ficelle initiale souhaitée, qui dépend de la hauteur du câble support d'accrochage - elle-même fonction de la hauteur de la serre -, par exemple 3 mètres.

Pour cela, il retourne plusieurs fois sur lui-même le crochet, qui fait office de bobine, pour dévider la bonne longueur. A cet effet, il compte chaque demi-tour qu'il imprime au crochet en laissant filer la ficelle. Ainsi, si la longueur de bobinage est de 16,5 cm, il devra imprimer au crochet 18 demi-tours.

On comprend que cette opération est longue et très fastidieuse, d'autant qu'elle est répétitive, la serre pouvant abriter un très grand nombre de plants de tomate. Elle est également source d'erreurs.

Dans le brevet FR-2779906, ou bien dans le document EP 2 412 231 A1, il est proposé un crochet à tomates du type exposé ci-dessus qui, tout en étant peu coûteux, possède, pré embobinée, une longueur de ficelle enroulée en écheveau sur un premier dévidoir et correspondant à la longueur initiale souhaitée, cette longueur étant parfaitement séparée du reste de la ficelle qui est enroulée en écheveau sur un second dévidoir, et pouvant par conséquent être dévidée automatiquement, sans calcul et sans risque d'erreur.

Ainsi, le fabricant fournit des crochets à tomates garnis de deux écheveaux de ficelle de telle sorte que la longueur de ficelle prélevable en premier dans le premier écheveau corresponde à la longueur initiale souhaitée (en fonction de la serre livrée), par exemple 3 mètres.

Mais avant d'accrocher le crochet à tomates sur le câble support, l'opérateur doit toujours dérouler la longueur de ficelle nécessaire du premier dévidoir ce qui constitue une opération supplémentaire à l'opération d'accrochage du crochet sur le câble support. L'opérateur libère par exemple ce premier tronçon de ficelle en l'arrachant du premier dévidoir sur le crochet à tomates.

Les opérations d'accrochage et de déroulage se font donc en deux étapes distinctes qui sont longues, pénibles et peuvent être fastidieuses, et la présente invention vise à les simplifier.

### Exposé de l'invention

L'idée à la base de l'invention est de réaliser les opérations d'accrochage et de déroulage du premier tronçon de ficelle en une seule étape.

Ainsi l'objet de l'invention est de proposer un crochet dévideur pour ficelle de tuteurage d'une plante grimpante, comprenant un crochet destiné à être accroché à un câble support et un dévidoir destiné à recevoir un écheveau de ficelle, caractérisé en ce que le crochet et le dévidoir sont agencés de telle façon qu'en accrochant le crochet sur le câble, le câble chasse l'écheveau du dévidoir.

Le crochet dévideur selon l'invention peut présenter les particularités suivantes :
- il peut comprendre deux crochets disposés respectivement à deux extrémités du dévidoir de telle façon qu'en accrochant l'un ou l'autre des deux crochets sur le câble, le câble chasse l'écheveau de ficelle du dévidoir;
- le crochet peut comporter une première gorge dans laquelle s'engage le câble et le dévidoir peut comporter une seconde gorge dans laquelle est enroulé l'écheveau de ficelle, la première gorge s'étendant sensiblement transversalement à la seconde gorge;
- le crochet dévideur peut être formé par pliage d'un fil métallique;
- il peut comprendre un premier dévidoir destiné à recevoir un premier écheveau de ficelle et un second dévidoir destiné à recevoir un second écheveau de ficelle.

L'invention s'étend à un dispositif de palissage pour la culture des tomates, qui comprend un crochet dévideur comme présenté plus haut.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés dans lesquels :
- la figure 1 représente schématiquement une vue de face d'un crochet dévideur selon l'invention ;
- la figure 2 représente schématiquement le crochet dévideur garni de deux écheveaux de ficelle;
- la figure 3 illustre l'action du câble support sur l'écheveau de ficelle pour le chasser du dévidoir;
- la figure 4 représente une variante d'exécution du crochet dévideur représenté sur la figure 1.
- La figure 5 montre des dispositifs de palissage de plants de tomate.

### Description des modes de réalisation

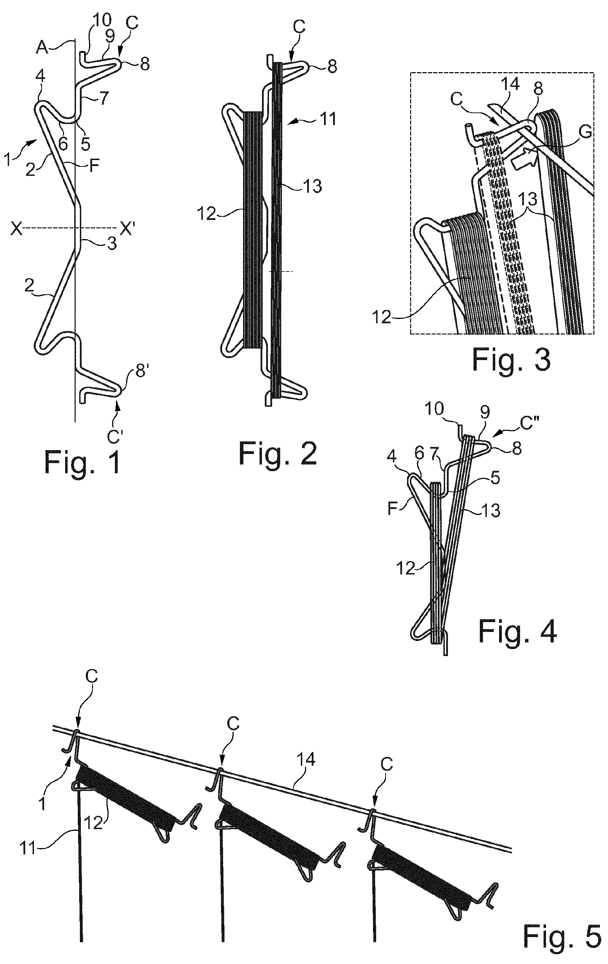

Un crochet dévideur pour ficelle de tuteurage d'une plante grimpante selon l'invention est représenté sur la figure 1 sous la référence 1.

Il s'agit ici d'un crochet dévideur qui est formé par pliage d'un fil métallique F et qui présente une certaine résistance mécanique et une certaine flexibilité.

Il s'étend suivant un axe longitudinale A et est symétrique suivant l'axe transversal médian XX'. Le plan de pliage est ici suivant les axes A et XX'.

Il comporte deux crochets à ses deux extrémités opposées suivant la direction A qui sont destinés à s'accrocher à un câble support 14 représenté sur la figure 5.

Le crochet dévideur selon l'invention illustré sur les figures 1 à 5 peut être garni de deux écheveaux 12, 13 de ficelle de tuteurage comme visible sur la figure 2 notamment. La référence 11 sur la figure 2 désigne la ficelle de tuteurage qui peut faire plusieurs mètres.

Comme visible sur la figure 1, le crochet dévideur 1 présente un corps médian 3 rectiligne perpendiculaire à l'axe XX' à partir duquel partent symétriquement deux branches 2 qui s'étendent sur une première portion de longueur d'abord suivant la direction A de manière opposée.

Chaque branche 2 comporte une seconde portion de longueur qui prolonge la première portion de longueur et qui est inclinée par rapport à la direction A vers l'extérieur (vers la gauche sur la figure 1) du crochet dévideur 1.

La seconde portion de longueur inclinée se prolonge ensuite par un premier coude 4.

Le premier coude 4 se prolonge par l'intermédiaire d'une autre section de longueur rectiligne 6 par un second coude 5 qui lui même se prolonge par l'intermédiaire d'une autre portion de longueur rectiligne 7 par un troisième coude 8. La portion de longueur 7 s'étend sur la figure 1 vers le haut suivant la direction longitudinale A.

Le second coude 5 définit une gorge d'un dévidoir pour le bobinage de la ficelle 11 d'un premier écheveau de ficelle, ici l'écheveau 12 sur la figure 2. La portion de longueur 7 qui est verticale sur la figure 1 sert de butée de maintien du premier écheveau en collaboration avec la portion de longueur 6 du fil F.

La portion de longueur 7 se prolonge donc par un troisième coude 8 qui est resserré et qui constitue un crochet C destiné à être accroché au câble 14.

Comme visible sur la figure 1, la portion de longueur de fil métallique 9 qui ferme sur le dessus le crochet C s'étend sensiblement transversalement à la direction longitudinale A et présente une extrémité 10 recourbée suivant la direction A pour définir une autre gorge d'un dévidoir pour le bobinage de la ficelle 11 d'un second écheveau de ficelle, ici l'écheveau 13 sur la figure 2. Cette extrémité 10 sert de butée de maintien du second écheveau dans le second dévidoir.

De par leur conception, les branches 2 sont suffisamment flexibles pour avoir une fonction de ressort. Ainsi lors de l'enroulage de l'écheveau 13, il est possible de régler la tension de la ficelle de l'écheveau 13 pour obtenir un bon maintien en place de l'écheveau dans son dévidoir. Plus forte sera la tension dans cet écheveau, plus difficile sera le démontage de l'extrémité de l'écheveau au niveau du coude 8.

A titre indicatif, la longueur entre les extrémités suivant la direction A du crochet dévideur selon la direction A est de l'ordre de 200mm.

Comme cela est bien connu, le crochet dévideur selon l'invention est garni de deux écheveaux 12 et 13 faits d'une seule ficelle 11.

Comme visible sur la figure 2, la ficelle 11 de l'écheveau 13, qui constitue l'écheveau secondaire, est enroulée sur un premier dévidoir formé par deux gorges d'enroulement opposées suivant la direction A qui sont chacune constituée par la portion de longueur du fil métallique 9 qui assure la fermeture du crochet C (et aussi par l'extrémité recourbée du fil métallique 10).

La ficelle 11 de l'écheveau principal, ici l'écheveau 12 qui comporte la plus grande longueur de ficelle 11, est enroulée sur un second dévidoir qui présentent deux gorges d'enroulement opposées suivant la direction A qui sont chacune constituée par un coude 5.

L'écheveau secondaire 13 de ficelle est destiné à être libéré du premier dévidoir en une seule fois, en laissant filer la ficelle jusqu'au sol. La longueur de la ficelle 11 dans l'écheveau 13 dépend de la hauteur du câble d'accrochage 14.

L'écheveau principal 12 de ficelle est destiné à être déroulé au cours de la croissance de la plante grimpante. La longueur de la ficelle 1 dans l'écheveau principal 12 peut être bien supérieure à celle dans l'écheveau secondaire 13. Il est entendu que la ficelle 11 est bobinée sans coupure entre les deux écheveaux 12 et 13.

Sur la figure 5, on a représenté le crochet dévideur 1 selon l'invention en position d'accrochage sur le câble support 14, la ficelle 11 de l'écheveau secondaire 13 étant déroulée vers le sol.

Comme visible sur la figure 5, le crochet dévideur 1 selon l'invention se tient incliné et il est possible par une simple traction sur la ficelle 11 de dévider progressivement l'écheveau principal 12.

Selon l'invention et comme illustré par la flèche G sur la figure 3, le crochet C et le second dévidoir qui reçoit l'écheveau secondaire 13 sont agencés de telle façon qu'en accrochant le crochet C (formé par le coude 8) sur le câble 14, le câble 14 chasse l'écheveau 13 du second dévidoir.

Plus particulièrement, l'utilisateur prend en main le crochet dévideur 1 garni des écheveaux 12 et 13 de ficelle selon l'invention au niveau du corps médian 3 et vient engager le câble support 14 dans la gorge du crochet d'accrochage C.

Le câble 14 exerce alors une poussée sur la boucle de l'écheveau secondaire 13, comme illustré par la flèche G sur la figure 3, qui est enroulé sur le dessus du crochet C ce qui a pour effet de chasser l'écheveau de ficelle 13 de son dévidoir, la ficelle 11 filant alors toute seule par gravité vers le sol.

Ce principe s'applique indifféremment aux deux crochets C, C' sur la figure 1 (formés par les deux coudes 8,8') disposés respectivement au deux extrémités du crochet dévideur 1 selon l'invention suivant la direction A de sorte que l'utilisateur n'a pas à réfléchir quant au sens d'accrochage du crochet dévideur 1 sur le câble support 14.

Cela permet donc de simplifier et d'accélérer l'installation de dispositifs de palissage de plants de tomate dans les serres industrielles.

On comprendra qu'avec le crochet dévideur 1 selon l'invention, l'inclinaison de la gorge du crochet par rapport à la direction longitudinale A peut avoir un effet sur la force de traction à exercer sur le crochet dévideur lorsqu'il est crocheter sur le câble support. Plus l'inclinaison de la gorge du crochet est proche de la perpendiculaire à cette direction A, plus le crochetage sur le câble 14 avec libération de l'écheveau de ficelle 13 s'en trouve facilité.

Par ailleurs, on comprendra que le coefficient de flexibilité du crochet dévideur selon l'invention (flexibilité du fil métallique F en particulier) a une influence sur cette force de traction à exercer du fait de l'effet ressort produit lorsque l'écheveau de ficelle 13 est poussé sur le câble lors du crochetage.

L'élasticité de la ficelle peut aussi avoir une influence sur la force de traction à exercer même si ce paramètre est assez négligeable.

Sur la figure 4, on a illustré un autre pliage du fil métallique F pour constituer un crochet dévideur selon l'invention avec un seul crochet C". Dans cette réalisation les deux dévidoirs ont des gorges d'enroulement communes.

Il est entendu que le crochet dévideur 1 selon l'invention pourrait être réalisé en matière plastique moulée, en tôle découpée, ou par additions successives de matériaux (plastique ou métallique) tels que ceux utilisés pour l'impression 3D.

Le crochet dévideur 1 selon l'invention est bien adapté à la culture des tomates en serre, mais pourrait aussi s'appliquer pour d'autres plantes grimpantes susceptibles de requérir des tuteurages analogues.

## Revendications

1. Crochet dévideur (1) pour ficelle de tuteurage d'une plante grimpante, comprenant un crochet (C,C',C") destiné à être accroché à un câble (14) support et un dévidoir destiné à recevoir un écheveau de ficelle, **caractérisé en ce que** ledit crochet et ledit dévidoir sont agencés de telle façon qu'en accrochant ledit crochet sur ledit câble (14), ledit câble (14) chasse ledit écheveau de ficelle dudit dévidoir.

2. Crochet dévideur (1) selon la revendication 1, **caractérisé en ce qu'**il comprend deux crochets (C,C') disposés respectivement à deux extrémités dudit dévidoir de telle façon qu'en accrochant l'un ou l'autre desdits deux crochets sur ledit câble (14), ledit câble (14) chasse ledit écheveau de ficelle dudit dévidoir.

3. Crochet dévideur (1) selon la revendication 1 ou 2, **caractérisé en ce que** le ou chaque crochet présente une première gorge dans laquelle s'engage ledit câble (14) et ledit dévidoir comprend une seconde gorge dans laquelle est enroulé ledit écheveau de ficelle, ladite première gorge s'étendant sensiblement transversalement à ladite seconde gorge.

4. Crochet dévideur (1) selon l'une des revendications précédentes, **caractérisé en ce qu'**il est formé par pliage d'un fil métallique.

5. Crochet dévideur (1) selon l'une des revendications précédentes, **caractérisé en ce qu'**il comprend un premier dévidoir destiné à recevoir un premier écheveau de ficelle et un second dévidoir destiné à recevoir un second écheveau de ficelle.

6. Dispositif de palissage pour la culture des tomates, **caractérisé en ce qu'**il comprend un crochet dévideur (1) selon l'une des revendications précédentes.

## Patentansprüche

1. Auf-/Abrollhaken (1) für Stützschnur einer Kletterpflanze, umfassend einen zum Aufhängen an ein Trägerkabel (14) bestimmten Haken (C, C', C") und eine zum Aufnehmen des Schnurstrangs bestimmte Haspel, **dadurch gekennzeichnet,**
**dass** der Haken und die Haspel derart ausgebildet sind, dass bei Aufhängen des Hakens auf dem Kabel (14) das Kabel (14) den Schnurstrang von der Haspel abschiebt.

2. Auf-/Abrollhaken (1) nach Anspruch 1, **dadurch gekennzeichnet, dass** er zwei Haken (C, C') umfasst, die jeweils an zwei Enden der Haspel derart angeordnet sind, dass bei Aufhängen des einen oder des anderen der beiden Haken an dem Kabel (14) das Kabel (14) den Schnurstrang von der Haspel abschiebt.

3. Auf-/Abrollhaken (1) nach Anspruch 1 oder 2, **dadurch gekennzeichnet, dass** der Haken oder jeder Haken eine erste Kehle aufweist, in die das Kabel (14) eindringt, und die Haspel eine zweite Kehle umfasst, in der der Schnurstrang aufgewickelt ist, wobei die erste Kehle sich im Wesentlichen quer zu der zweiten Kehle erstreckt.

4. Auf-/Abrollhaken (1) nach einem der vorhergehenden Ansprüche, **dadurch gekennzeichnet, dass** er durch Falten eines metallischen Drahtes hergestellt ist.

5. Auf-/Abrollhaken (1) nach einem der vorhergehenden Ansprüche, **dadurch gekennzeichnet, dass** er eine zur Aufnahme eines ersten Schnurstrangs bestimmte erste Haspel und eine zur Aufnahme eines zweiten Schnurstrangs bestimmte zweite Haspel umfasst.

6. Aufbindeeinrichtung für die Aufzucht von Tomaten, **dadurch gekennzeichnet, dass** sie einen Auf-/Abrollhaken (1) nach einem der vorhergehenden Ansprüche umfasst.

## Claims

1. An unreeling hook (1) for string for training a climbing plant, said unreeling hook comprising a hook (C, C', C") designed to be hooked onto a support cable (14) and an unreeling reel designed to receive a hank of string, said unreeling hook being **characterized in that** said hook and said unreeling reel are arranged in such a manner that, by hooking said hook onto said cable (14), said cable (14) is caused to expel said hank of string from said unreeling reel.

2. An unreeling hook (1) according to claim 1, **characterized in that** it has two hooks (C, C') disposed at respective ends of said unreeling reel in such a manner that, by hooking either of said two hooks onto said cable (14), the cable (14) is caused to expel said hank of string from said unreeling reel.

3. An unreeling hook (1) according to claim 1 or claim 2, **characterized in that** the or each hook has a first groove in which said cable (14) engages, and said unreeling reel is provided with a second groove in which said hank of string is wound, said first groove extending substantially transversely to said second groove.

4. An unreeling hook (1) according to any preceding claim, **characterized in that** it is formed by folding a wire.

5. An unreeling hook (1) according to any preceding claim, **characterized in that** it has a first unreeling reel designed to receive a first hank of string and a second unreeling reel designed to receive a second hank of string.

6. A tying device for tomato-growing, said tying device being **characterized in that** it includes an unreeling hook (1) according to any preceding claim.
